# EUROPÄISCHE PATENTSCHRIFT

(11) **EP 2 158 281 B1**
(45) Veröffentlichungstag und Bekanntmachung des Hinweises auf die Patenterteilung: **10.07.2013**
(21) Anmeldenummer: 08758530.3
(22) Anmeldetag: 15.05.2008
(51) Int. Cl.: C09D 183/16, C08L 83/16, C09D 5/00

(54) **FARBPIGMENTIERTE LACKZUSAMMENSETZUNG MIT HOHER DECKKRAFT, ERHÖHTER KRATZBESTÄNDIGKEIT UND EASY TO CLEAN EIGENSCHAFTEN**
COLOR-PIGMENTED PAINT COMPOSITION HAVING HIGH COVERING POWER, INCREASED SCRATCH RESISTANCE, AND EASY-TO-CLEAN PROPERTIES
COMPOSITIONS DE PEINTURE À PIGMENTS COLORÉS PRÉSENTANT UN MEILLEUR POUVOIR COUVRANT, UN MEILLEUR POUVOIR ANTI-RAYURES ET DES PROPRIÉTÉS DE NETTOYAGE FACILE

(30) Priorität: 16.05.2007 DE 102007023094
(43) Veröffentlichungstag der Anmeldung: 03.03.2010
(73) Patentinhaber: AZ Electronic Materials (Luxembourg) S.à.r.l., 1160 Luxembourg (LU)
(72) Erfinder: BRAND, Stefan, 69493 Hirschberg-Leutershausen (DE); DIERDORF, Andreas, 65719 Hofheim (DE); LIEBE, Hubert, 65207 Wiesbaden (DE); OSTEROD, Frank, 65835 Liederbach (DE); MAHN, Markus, 60489 Frankfurt (DE); RYAN, Ken, Huntingdon Valley, PA 19006 (US)
(74) Vertreter: Rippel, Hans Christoph
(86) Internationale Anmeldenummer: PCT/EP2008/003887
(87) Internationale Veröffentlichungsnummer: WO 2008/138610

(56) Entgegenhaltungen:
- US-A1- 2003 083 453
- US-A1- 2005 279 255

## Beschreibung

Diese Erfindung betrifft Lackzusammensetzungen, die in Anwendungsgebieten eingesetzt werden können, wo eine hohe Farbstärke und Deckkraft, verbesserter Kratzschutz, verbesserte Bewitterungsstabilität und verbesserte Reinigungseigenschaften benötigt werden.

Derartige Lacksysteme werden insbesondere für Fahrzeuge wie Kraftfahrzeuge, Busse, Baumaschinen und Schienenfahrzeuge benötigt, wo ein haltbares, farbig ansprechendes Beschichtungssystem gefordert wird. Hier gelten besondere Anforderungen an die Haltbarkeit auch hinsichtlich der Farbe und der dauerhaften Kratzfestigkeit.

Vielfach wird versucht dieses Anforderungsprofil durch einen Mehrschichtaufbau zu erreichen. So findet man in der Automobilbranche einen Vierschichtaufbau aus Primer, Füller, Basislack und Klarlack. Nähere Einzelheiten hierzu findet man in Automotive Paints and Coatings, VCH Verlagsgesellschaft: Weinheim (1995).

Der Verzicht auf einen Klarlack wird zum Beispiel in JP2002080776 (one coat coating Material composition) beschrieben. Hier ist jedoch die Rede von Metalleffektpigmenten, die aufgrund ihres anorganischen Charakters schon bewitterungsstabil sind. Außerdem wird hier keine erhöhte Kratzfestigkeit und Easy to Clean Eigenschaft in Kombination mit den beschriebenen optischen Eigenschaften erzielt.

In weiteren Fällen ist auch der Verzicht auf einen zusätzlichen Klarlacke bekannt. Jedoch handelt es sich bei diesen Monocoats um qualitativ niedriger zu bewertende Beschichtungen wie sie z. B. im Bereich der Industrielacke eingesetzt werden. Diese sind von Ihren Eigenschaftsprofilen schlechter, insbesondere hinsichtlich der Bewitterungsstabilität und des optischen Erscheinungsbildes.

Es ist hier zu betonen, dass der Basislack die Farbpigmente enthält und der Klarlack die erforderliche Kratzfestigkeit und UV Stabilisierung liefern muss.

Die Schädigung des farbpigmentierten Basislacks kann sowohl das Bindemittel als auch das Pigment betreffen. Aus der Literatur ist bekannt, dass Farbpigmente elektronisch angeregte Zustände besitzen (HOMO - LUMO, Highest occupied molecular orbital, lowest unoccupied molecular orbital), die dann als Diradikal vorlieben. Ausgehend von diesen Spezies kann es zu Abbaureaktionen kommen, insbesondere wenn noch Sauerstoff zugegen ist.

Vielfach wird versucht durch Einarbeitung von nanoskaligen Partikeln die Kratzfestigkeit im Klarlack zu verbessern. Derartige Nanopartikel liegen teilweise verstärkt an der Oberfläche, was zur Folge hat, dass die Kratzfestigkeit nicht von langer Haltbarkeit ist, sobald es zu einer Schädigung der oberen Klarlackschicht kommt. Derartige Systeme werden zum Beispiel in WO 01/009 231 beschrieben.

Auch das Konzept der selbst heilenden Klarlacke durch Erniedrigung der Glasübergangstemperaturen ist kritisch zu bewerten, da die hier eingesetzten ausgehärteten Lacke ein mangelhaftes Anschmutzverhalten aufzeigen.

Zudem sind diese Klarlacksysteme auf Lösungsmittelbasis. Nur die eingesetzten, lösungsmittelbasierten Polyurethansysteme verfügen über eine ausreichende Vernetzungsdichte mit einem entsprechenden Eigenschaftsprofil. Dies hat zur Folge, dass dieser Mehrschichtaufbau auch aus ökologischer Sicht bedenklich ist. Die anzutreffenden wasserbasierten Klariacksysteme sind qualitativ schlechter.

Des Weiteren können Haftungsprobleme zum Basislack auftreten, da Klarlack und Basislack von ihren Lösungsmitteln, chemischen Strukturen und physikalischen Eigenschaften (Ausdehnungskoeffizienten, Glasübergangstemperaturen) unterschiedlich sind.

Um eine Stabilisierung der Pigmente und Bindemittel im Basislack hinsichtlich der Umwelteinflüsse und Strahlung zu gewährleisten, muss der nachträglich aufgebrachte Klarlack über entsprechende Stabilisatoren verfügen. Außerdem erfolgt eine Schädigung des Basislacks bei mangelndem Schutz durch den Klarlack auch durch eindringendes Wasser und Sauerstoff.

Somit hat der heutige Mehrschichtaufbau gravierende Nachteile hinsichtlich Ökologie, Wirtschaftlichkeit, Kratzfestigkeit, Pigmentierung und Stabilität bzw. Haltbarkeit.

Die japanische Patentliteratur beschreibt vielfach den Einsatz von Polysilazanen, um die Kratzfestigkeit zu erhöhen. Auch WO 2004/039 904 A1 und WO 2006/113 447 beschreiben die Erhöhung der Kratzfestigkeit durch Polysilazane. Hier handelt es sich aber um Anwendungen, die zwar eine hohe Kratzfestigkeit aufzeigen, jedoch nicht geeignet sind um Farbpigmente optisch ansprechend einzuarbeiten.

WO 2004/011 212 beschreibt ebenfalls die Verwendung von Polysilazanen. Hier wird jedoch auf die Verwendung der Polysilazane als Bindemittel für Klarlacke abgezielt, die für Felgenlacke eingesetzt werden können. Auch hier handelt es sich nicht um farbpigmentierte Systeme. In WO 2005/085375 wird die Einarbeitung von photokatalytisch aktivem TiO₂ beschrieben, jedoch handelt es sich hier um ein Zweischichtsystem (erste Schicht: PHPS, zweite Schicht PHPS + Ti02). Derartige zweischichtige Klarlacke sind nachteilig in der Applikation, außerdem ist die beschriebene maximale Schichtstärke von 20 Micrometer nicht ausreichend um farbpigmentierte Systeme mit hoher Deckkraft herzustellen. Höhere Schichtstärken sind bei Perhydropolysilazanen (PHPS) rissanfällig.

Des Weiteren werden in der Literatur polysilazanhaltige Lacksysteme beschrieben, die dispergierte Pigmente enthalten. JP 11269432 beschreibt z. B. die Einarbeitung von Pigmenten in Polysilazane unter Verwendung von unterschiedlichen Dispergiergeräten. Die hier beschriebenen Systeme enthalten jedoch nur Perhydropolysilazan und sind darauf ausgerichtet, dünne (ca. 2 µm), transparente, lichtdurchlässige Beschichtungen zu erzeugen. Höhere Schichtstärken sind mit diesem Material nicht möglich, da diese zu spröde werden.

Auch JP-A-2005 092 328 beschreibt die Kombination von Polysilazanen und Farbpigmenten. Hier wird jedoch das Polysilazan als (Co-bindemittel) Additiv verwendet um die Adhäsion zu verbessern. Die hier beschriebenen Systeme sind gut pigmentierbar, verfügen über eine gute Adhäsion und Dauerhaftigkeit. Aufgrund ihres hohen Silikonanteils ist hier jedoch die Härte nur auf niedrigem Niveau

Trialoxysilxylgruppen zur feuchtigkeitsinduzierten Lackaushärtung sind bekannt und entsprechende Produkte sind industriell verfügbar (z. B. Gelest). Auf diese Weise sind Lacke, Elastomere und Dichtungen auf Silikonbasis formulierbar, die unter Feuchtigkeitseinwirkung bei Raumtemperatur aushärten. In diesem Zusammenhang sei auch EP 1420947 B1 genannt. Hier wird ein Feuchtigkeitshärtendes Polysilazan und Polysiloxazan für Klarlack- und Korrosionsschutzanwendungen beschrieben.

Auch ist die Oberflächenbelegung von Pigmenten bekannt und wird vielfach durchgeführt um die Verträglichkeit zum Anwendungssystem zu erhöhen und um zu gewährleisten, dass sich das so modifizierte Pigment besser einarbeiten lässt. Auch ist bekannt, dass solche Pigmente mit niedermolekularen Silazanderivaten belegt werden können. Als Beispiel seien die Aerosile R812 und R8200 (Degussa) genannt, die mit Hexamethyldisilazan (HMDS) modifiziert sind. Durch die HMDS Behandlung wird die ursprüngliche hydrophile Pigmentoberfläche hydrophob. Hier handelt es sich um einen anorganischen Füllstoff, der die rheologischen Eigenschaften des flüssigen Lacks verändert. Das HMDS wirkt nicht als Bindemittel sondern als Dispergiermittel.

Theoretische Betrachtungen in der Literatur (R. Walsh, Bond dissociation energy values in silicon containing compounds and some of their implications, Accounts of Chemical Research, 1981, 14, 246-252) zeigen, dass die Dissoziationsenergien der Si-N Bindung (ca. 85 - 100 kcal/mol) im Vergleich zu den Energien der C-N (70 kcal/mol) Bindungen höher liegen.

Aufgabe ist es daher, die vorstehend beschriebenen Nachteile der im Stand der Technik beschriebenen Lacksysteme zu beheben und ein Lacksystem zur Verfügung zu stellen, das sich sowohl durch eine hohe und gleichmäßige Deckkraft, als auch durch eine hohe Härte und somit gute Kratzbeständigkeit auszeichnet, und das es vorteilhafter Weise erlaubt den Mehrschichtaufbau bzw. das zusätzliche Aufbringen einer Klarlackschicht zu umgehen.

Überraschenderweise wurde nun gefunden, dass man bei geeigneter Wahl eines Polysilazanbindemittels und der Füllstoffe die vorstehend genannte Aufgabe lösen kann.

Das farbpigmentierte Lacksystem zeichnet sich durch hohe Kratzfestigkeit, easy to clean Eigenschaften und schöne Farbtöne aus. Die erforderlichen hohen Schichtstärken sind durch die Verwendung von organischen Polysilazanen möglich, da diese im Vergleich zu den Perhydropolysilazanen im ausgehärteten Lack über eine höhere Elastizität verfügen. Somit kann auch auf die Verwendung eines Cobindemittels verzichtet werden, ohne jedoch die Verwendung eines solchen auszuschließen. Somit sind pigmentierte Lackschichten mit hoher Deckkraft möglich. Außerdem sind die eingearbeiteten Pigmente, sofern die Pigmentdispergierung in Gegenwart des Bindemittels erfolgt, leicht dispergierbar, da das Polysilazan selbst über pigmentstabilisierende Eigenschaften und entsprechende Ankergruppen verfügt. Diese funktionellen Gruppen im Polysilazan sind nicht nur für die Farbpigmentierung von Bedeutung, vielmehr übernehmen diese eine bedeutende Rolle hinsichtlich der Kratzfestigkeit. Das Lacksystem kann sowohl auf Metalloberflächen, insbesondere Alu, als auch auf Primer- oder Füllerlackschichten appliziert werden. Dies ist je nach Anwendung zu entscheiden.

Die vorliegende Erfindung betrifft daher eine farbpigmentierte Lackzusammensetzung mit hoher Deckkraft enthaltend ein Lösemittel oder ein Lösemittelgemisch und
a.) bezogen auf die Gesamtformulierung 1 bis 80 Gew.-% eines Polysilazans der Formel (1)

   -(SiR'R"-NR"')ₙ- (1)

   und
b.) bezogen auf die Gesamtformulierung 1 bis 15 Gew.-%, besonders 2 bis 8 Gew.-% eines oder mehrer Pigmente
wobei R', R", R"' gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist.

Die mit der erfindungsgemäßen Lackzusammensetzung erhaltenen Lackschichten besitzen eine hohe Farbstärke, eine hervorragende Deckkraft und verbesserte Kratzbeständigkeit und easy to clean Eigenschaften. Dies ist insbesondere darauf zurückzuführen, weil das Polysilazanbindemittel über vernetzende Strukturen verfügt, die als solche auch als Ankergruppen für die Farbpigmente fungieren, wodurch eine gleichmäßige Verteilung des Bindemittels und des Pigments im Lösemittel erreicht werden kann, was zu einer gleichmäßigen Pigmentierung und auf Grund der homogenen Schichten zu einer erhöhten Kratzfestigkeit führt. Die easy to clean Eigenschaften lassen sich z. B. über Kontaktwinkelmessungen nachweisen. Diese Eigenschaften lassen sich nur bei geeigneter Vernetzungsdichte und Polarität im Bindemittel erzielen. Insbesondere besitzen die erfindungsgemäßen Lackschichten einen Kontaktwinkel von mindestens 85.

Die erfindungsgemäßen Lackzusammensetzungen können insbesondere dort eingesetzt werden, wo eine hohe Bewitterungsstabilität und verbesserte Reinigungseigenschaften der Lackbeschichtungen verlangt werden.

Bei Schnellbewitterungstests nach DIN 11341 (2000 h) kommt es bei den mit den erfindungsgemäßen Lackzusammensetzungen erzeugten Lackschichten zu keinem Auskreiden.

In einer bevorzugten Ausführungsform werden dabei solche Polysilazane eingesetzt, in denen R', R", R'" unabhängig voneinander für einen Rest aus der Gruppe Wasserstoff, Methyl, Ethyl, Propyl, iso-Propyl, Butyl, iso-Butyl, tert.-Butyl, Phenyl, Tolyl, Vinyl oder 3-(Triethoxysilyl)-propyl, 3-(Trimethoxysilylpropyl) stehen.

In einer weiteren bevorzugten Ausführungsform enthält die erfindungsgemäße Beschichtung Polysilazane der Formel (2),

-(SiR'R"-NR'")ₙ-(SiR*R**-NR***)ₚ - (2)

wobei R', R", R"', R*, R** und R*** unabhängig voneinander für Wasserstoff oder einen gegebenenfalls substituierten Alkyl-, Aryl-, Vinyl oder (Trialkoxysilyl)alkylRest stehen, wobei n und p so bemessen sind, dass das Polysilazan ein zahlenmittleres Molekulargewicht von 150 bis 150.000 g/mol aufweist.

Insbesondere bevorzugt sind Verbindungen in denen
- R', R'" und R*** für Wasserstoff und R", R* und R** für Methyl stehen;
- R', R'" und R*** für Wasserstoff und R", R* für Methyl und R** für Vinyl stehen;
- R', R"', R* und R*** für Wasserstoff und R" und R** für Methyl stehen.

Ebenfalls bevorzugt werden Polysilazane der Formel (3) eingesetzt

-(SiR'R"-NR"')ₙ-(SiR*R**-NR***)ₚ-(SiR¹, R²-NR³)_{q}- (3)

wobei R', R", R"', R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei n, p und q so bemessen sind, dass das Polysilazan ein zahlenmittleres Molekulargewicht von 150 bis 150.000 g/mol aufweist.

Insbesondere bevorzugt sind Verbindungen in denen R', R'" und R*** für Wasserstoff und R", R*, R** und R² für Methyl, R³ für (Triethoxysilyl)propyl und R¹ für Alkyl oder Wasserstoff stehen.

Im Allgemeinen beträgt der Anteil an Polysilazan (3) in der Gesamtformulierung 1 bis 80 Gew.-%, bevorzugt 5 bis 70 Gew.-%, besonders bevorzugt 20 bis 60 Gew.-%.

Das organische Pigment kann ein Pigment aus der Gruppe der Azopigmente, wie Monoazo-, Disazo-, Naphtol-, Benzimidazolon-, Metallkomplexpigmente, oder der polyzyklischen Pigmente, wie Isoindolinon-, Isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron, Perylen-, Perinon-, Pyranthron-, Diketopyrrolopyrrol-, Isoviolanthron- und Azomethinpigmente, sein.

Bevorzugte organische Pigmente im Sinne der vorliegenden Erfindung sind beispielsweise C.I. Pigment Yellow 1 (C.I. No. 11 680), C.I. Pigment Yellow 3 (C.I. No. 11 710), C.I. Pigment Yellow 12 (C.I. No. 21 090), C.I. Pigment Yellow 13 (C.I. No. 21 100), C.I. Pigment Yellow 14 (C.I. No. 21 095), C.I. Pigment Yellow 17 (C.I. No. 21 105), C.I. Pigment Red 123 (C.I. No. 71 145), C.I. Pigment Red 149 (C.I. No. 71 137), C.I. Pigment Red 178 (C.I. No. 71 155), C.I. Pigment Red 179 (C.I. No. 71 130), C.I. Pigment Red 190 (C.I. 71 140), C.I. Pigment Red 224 (C.I. No. 71 127), C.I. Pigment Violet 29 (C.I. No. 71 129), C.I. Pigment Orange 43 (C.I. No. 71 105), C.I. Pigment Red 194 (C.I. No. 71 100), C.I. Pigment Violet 19 (C.I. No. 73 900), C.I. Pigment Red 122 (C.I. No. 73 915), C.I. Pigment Red 192, C.I. Pigment Red 202 (C.I. No. 73 907), C.I. Pigment Red 207, C.I. Pigment Red 209 (C.I. No. 73 905), C.I. Pigment Red 206 (C.I. No. 73 900/73 920), C.I. Pigment Orange 48 (C.I. No. 73 900/73 920), C.I. Pigment Orange 49 (C.I. No. 73 900/73 920), C.I. Pigment Orange 42, C.I. Pigment Yellow 147, C.I. Pigment Red 168 (C.I. No. 59 300), C.I. Pigment Yellow 120 (C.I. No. 11 783), C.I. Pigment Yellow 151 (C.I. No. 13 980), C.I. Pigment Brown 25 (C.I. No. 12 510), C.I. Pigment Violet 32 (C.I. No. 12 517), C.I. Pigment Orange 64; C.I. Pigment Brown 23 (C.I. No. 20 060), C.I. Pigment Red 166 (C.I. No. 20 730), C.I. Pigment Red 170 (C.I. No. 12 475), C.I. Pigment Orange 38 (C.I. No. 12 367), C.I. Pigment Red 188 (C.I. No. 12 467), C.I. Pigment Red 187 (C.I. No. 12 486), C.I. Pigment Orange 34 (C.I. No. 21 115), C.I. Pigment Orange 13 (C.I. No. 21 110), C.I. Pigment Red 9 (C.I. No. 12 460), C.I. Pigment Red 2 (C.I. No. 12 310), C.I. Pigment Red 112 (C.I. No. 12 370), C.I. Pigment Red 7 (C.I. No. 12 420), C.I. Pigment Red 210 (C.I. No. 12 477), C.I. Pigment Red 12 (C.I. No. 12 385), C.I. Pigment Blue 60 (C.I. No. 69 800), C.I. Pigment Green 7 (C.I. No. 74 260), C.I. Pigment Green 36 (C.I. No. 74 265); C.I. Pigment Blue 15:1, 15:2, 15:3, 15:4, 15:6 und 15 (C.I. No. 74 160); C.I. Pigment Blue 56 (C.I. No. 42 800), C.I. Pigment Blue 61 (C.I. No. 42 765:1), C.I. Pigment Violet 23 (C.I. No. 51 319), C.I. Pigment Violet 37 (C.I. No. 51 345), C.I. Pigment Red 177 (C.I. No. 65 300), C.I. Pigment Red 254 (C.I. No. 56 110), C.I. Pigment Red 255 (C.I. No. 56 1050), C.I. Pigment Red 264, C.I. Pigment Red 270, C.I. Pigment Red 272 (C.I. No. 56 1150), C.I. Pigment Red 71, C.I. Pigment Orange 73, C.I. Pigment Red 88 (C.I. No. 73 312), C.I. Pigment Yellow 175 (C.I. No. 11 784), C.I. Pigment Yellow 154 (C.I. No. 11 781), C.I. Pigment Yellow 83 (C.I. No. 21 108), C.I. Pigment Yellow 180 (C.I. No. 21 290), C.I. Pigment Yellow 181 (C.I. No. 11 777), C.I. Pigment Yellow 74 (C.I. No. 11 741), C.I. Pigment Yellow 213, C.I. Pigment Orange 36 (C.I. No. 11 780), C.I. Pigment Orange 62 (C.I. No. 11 775), C.I. Pigment Orange 72, C.I. Pigment Red 48:2/3/4 (C.I. No. 15 865:2/3/4), C.I. Pigment Red 53:1 (C.I. No. 15 585:1), C.I. Pigment Red 208 (C.I. No. 12 514), C.I. Pigment Red 185 (C.I. No. 12 516), C.I. Pigment Red 247 (C.I. No. 15 915) und C.I. Pigment Red 146 (C.I. No. 12 485).

Es können auch mehr als ein organisches Pigment eingesetzt werden. Die Verwendung von anorganischen Buntpigmenten und Pigmenten ist ebenfalls möglich.

Auch ist die Verwendung von Pigmentpräparationen möglich. Exemplarisch seien hier die Sanodospers A und Hostatint Präparationen Clariant Produkte (Deutschland) GmbH genannt.

In einer besonders bevorzugten Ausführungsform werden die Pigmente Hostaperm Red D3G70, Hostaperm Green GNX, Hostaperm Blue BT627 D (alle Clariant Produkte (Deutschland) GmbH) eingesetzt.

Durch den Einsatz von Polysilazanen als Bindemittel, das funktionelle Gruppen enthält wird eine Integration des Pigments im Bindemittel erreicht, welche für die Härte und die "easy to clean" Eigenschaften der resultierenden Lackschichten mitverantwortlich ist, Diese Wechselwirkung zwischen Pigment und Bindemittel hat positive Auswirkung auf die Härte der Lackschicht, das reduzierte Migrationsverhalten der Pigmente und auf die Elastizität der Lackschicht und Kratzfestigkeit.

Die Wechselwirkung kann chemischer oder physikalischer Natur sein. Bei den bevorzugten funktionellen Gruppen im Bindemittelmolekül sind hier Vinyl und/oder Trialkoxysilylgruppen, insbesondere Triethoxysilylgruppen zu nennen.

Durch die Verwendung der Polysilazane als Bindemittel werden die im Lösemittel fein verteilten, farbigen Pigmente insbesondere vor der Schädigung durch Gase und durch leicht flüchtige Verbindungen geschützt. Durch die Verwendung von Polysilazanen mit hoher Gasbarriere wie sie z. B. in WO 2006/056 285 A1 beschrieben werden gelingt es die resultierenden Lackschichten hinsichtlich gefährlicher Abbauprozesse durch Umweltgase zu schützen. Hier ist insbesondere durch UV Strahlung aktivierter Sauerstoff und Wasserdampf zu nennen.

Das erfindungsgemäß eingesetzte Lösungsmittel oder Lösungsmittelgemisch sollte nicht mit dem Bindemittel reagieren, daher sollten Alkohole und Amine vermieden werden. Das Lösungsmittel bzw. die Lösungsmittelmischung sollte nicht protisch sein und stammt vorzugsweise aus der Gruppe der Ester, Ether, Aromaten oder Aliphaten. Besonders günstig ist z.B. Butylacetat. Je nach Aushärtemethode und Aushärtezeit muss hier das entsprechende Lösungsmittel gewählt werden, dem Fachmann sind die entsprechenden Parameter bekannt.

Des Weiteren kann das Lacksystem Füllstoffe und Additive enthalten um die Rheologie, Viskosität, Verlauf, Entlüftung, Leitfähigkeit etc. günstig zu beeinflussen. Diese Parameter müssen je nach Applikationsmethode eingestellt werden und betreffen den flüssigen Lack. Derartige Additive werden z. B. von den Firmen Byk und Tego Chemie Service (beide Deutschland) angeboten. Außerdem sind hier Produkte auf Basis pyrogener Kieselsäuren zu nennen. Hier sind folgende Applikationsmethoden zu nennen: Walzen, tauchen, sprühen (hier wiederum verschiedene Methoden) und drucken. Die jeweils speziellen Lackanforderungen für das jeweilige Verfahren sind dem Fachmann bekannt und müssen über die entsprechenden Additive eingestellt werden.

Des Weiteren kann das Lacksystem Stoffe und Additive enthalten um die Härte, Oberflächenglätte und Slip Verhalten günstig zu beeinflussen. Diese Parameter müssen je nach Erfordernissen eingestellt werden und betreffen den ausgehärteten Lack. Derartige Additive werden ebenfalls von den Firmen Byk und Tego Chemie Service angeboten.

Die erfindungsgemäße Lackformulierung kann nach einer der zuvor genannten Verfahren appliziert werden und die erzielten Schichtstärken nach der Aushärtung liegen zwischen 5 und 300 µm, besonders geeignet sind Schichtstärken zwischen 10 und 100 µm, ganz besonders zwischen 25 und 60 µm. Ist die Applikation der hohen Nassfilmstärken nicht in einem Arbeitsgang möglich, erfolgt nach kurzer Ablüftzeit eine erneute Applikation.

Die Trocknung des Lacksystems erfolgt nun bei Raumtemperatur und/oder in einem Ofen bei Luftfeuchtigkeiten von 30 bis 80 %, ganz besonders 40 bis 70 % und Ofentemperaturen < 100°C. Ein Trocknungsprozess bei höheren Temperaturen und geringeren Luftfeuchten kann nachgeschaltet sein.

### Beispiele:

### Beispiel 1:

Herstellung einer rotpigmentierten Polysilazanlackformulierung:

| Komponente | Masse /g |
|---|---|
| Pre-Mix | 50,0 |
| Tego Additiv | 0,16 |
| n-Butylacetat | 12,39 |
| Hostaperm, Red D3G | 2,45 |
| ML33/C12 | 35,0 |

Der Pre-Mix wird hergestellt aus 90,9 g n-Butylacetat und 9,1 g CAB.

Der Pre-Mix wird mit Tego Glide versetzt und das Rotpigment zugegeben. Im Anschluss werden dem Reibansatz Glasperlen zugegeben und die Viskosität mit n-Butylacetat eingestellt. Nach 30 min wird das Polysilazan ML33/C12 zugegeben und weitere 5 bis 10 min gerührt. Im Anschluss werden die Perlen abfiltriert.

### Verwendete Stoffe:

| | |
|---|---|
| CAB | Cellulose Acetate Butyrate, Eastman Chemicals |
| Tego Additiv | Tego Additive, Tego Chemie Service GmbH, Essen, Germany |
| n-Butylacetat | Solvent, Eastman Chemical |
| Hostaperm Red D3G70 | Pigment, Clariant AG, Muttenz, Schweiz |
| Clariant KiON ML33/C12 | Polysilazan, Clariant AG, Muttenz, Schweiz |

In analoger Weise wurden zur Herstellung pigmentierter Lackformulierungen die Rezepturen 2-4 gefertigt. Es wurden verschiedene Pigmentkonzentrationen eingesetzt.

### Beispiel 2 (Hostaperm Blue BT 627 D, Clariant)

Pigmentkonzentration: 1,75 %

### Beispiel 3 (Hostaperm Green GNX, Clariant)

Pigmentkonzentration: 2,45 %

Beispiel 4 (Shepered black EX 1245, Shepherd Color Company, Cincinnati, USA) Pigmentkonzentration: 8,2 %

Die Beispiele 5 bis 7 dienen als Referenzbeispiele. Hier wurden die identischen Pigmente eingesetzt. Als Bindemittel wurden hier organische Bindemittel verwendet.

### Referenzbeispiel 5 (lufttrocknender Langölalkyd-Lack)

Die Pigmentanreibung erfolgt mit einem Anreibelack auf Vialkyd AS 673 Basis (UCB Resins). Zum auflacken wird ebenfalls ein System auf Viaalkyd AS 673 verwendet. Die Aushärtung erfolgt zunächst für 15 min bei Raumtemperatur, danach für 60 min bei 60 °C.

### Referenzbeispiel 6 (Alkyd-Melamin-Einbrennlack)

Die Pigmentanreibung erfolgt mit einem 35 % Anreibelack auf Vialkyd AC451 (UCB Resins) Basis. Zum auflacken wird ein Auflackgemisch mit Vialkyd und Maprenal (UCB Resins) verwendet. Die Aushärtung erfolgt nach Ablüften bei 140 °C für 20 min.

In Beispiel 7 wurde zusätzlich ein Klarlack appliziert, der über entsprechende UV Stabilisatoren verfügte:

### Referenzbeispiel 7: (Alkyd-Melamin-Einbrennlack + Klarlack)

Analog 6, jedoch noch mit zusätzlichem Klarlack

Die Rezepturen aus den Beispielen 1 bis 7 wurden nun appliziert, ausgehärtet und ausgeprüft. Nähere Informationen hierzu in Tabelle 1:

**Tabelle 1:**

| Nr. | Bindemittel | Pigment | Bewitterungstest analog DIN ISO 11341, 3000 h |
|---|---|---|---|
| 1 | ML33/C12 | Hostaperm Red D3G | keine Kreidung |
| 2 | ML33/C12 | Hostaperm Blue BT327 D | keine Kreidung |
| 3 | ML33/C12 | Hostaperm Green GNX | keine Kreidung |
| 4 | ML33/C12 | Shepered black EX 1245 | keine Kreidung |
| R5 | Langölalkyd | Hostaperm Red D3G | Kreidung |
| R6 | Alkyd Melamin | Hostaperm Blue BT327 D | Kreidung |
| R7 | Alkyd Melamin (+ Klarlack) | Hostaperm Blue BT327 D | keine Kreidung |

**Tabelle 2:**

| Coloristische Bewertung der Proben nach 3000 h Bewitterungstest (Gerät: Atlas CI 5000, Methode: DIN EIN ISO 11341): | | |
|---|---|---|
| Beispiel | Schichtstärke / µm | Bleistifthärte nach 3000 h Schnellbewitterung |
| 1 | 25 | 4 H |
| 2 | 28 | 6 H |
| 3 | 26 | 4 H |
| 4 | 40 | 4 H |
| R5 | 30 | 2 B |
| R6 | 28 | F |
| R7 | 27+30 | F |

### Beispiel 8 A bis E:

Ein 27 %iger Langölalkyd-TiO₂-Weißlack (Bindemittel Vialkyd AS 673, UCB Resins; TiO₂ Kronos 2059) wird in unterschiedlichen Verhältnissen mit Polysilazan ML33/C12 (KiON, Clariant AG) versetzt. Die Mischung wurde mit einem 100 mm Ziehrahmen auf Glas und beschichtetes Testpapier appliziert und nach ablüften für 1 Stunde bei Raumtemperatur ausgehärtet.

| Beispiel | Weißlack | ML33/C12 |
|---|---|---|
| 8 A: | 10,0 g | 0 g |
| B | 9,0 g | 1,0 g |
| C | 7,0 g | 3,0 g |
| D | 5,0 g | 5,0 g |
| E | 0,0 g | 10,0 g |

| Beispiel | Pendelhärte nach 1d und 14d Oszillationen | | Kontaktwinkel (gegen Wasser) |
|---|---|---|---|
| A | 17 (1d) | 32 (14d) | 92 |
| B | 20 (1d) | 27 (14d) | 97 |
| C | 28 (1d) | 36 (14d) | 98 |
| D | 51 (1d) | 56 (14d) | 99 |

### Geräte:

Pendelhärtemessgerät, Hersteller: Byk Gardner

Kontaktwinkelmessgerät, Hersteller: Drop Shape Analysis System, DSA 10 Mk2

### Beispiel 9: Easy to Clean Anwendung:

Eine ausgehärtete rote Lackschicht auf einem Aluminium Q-Panel nach Beispiel 1 wird mit einer lösungsmittelhaltiger Farbe (Rust Oleum Painter's Touch, Rust Oleum, Vernon Hills, USA) besprüht und über Nacht bei Raumtemperatur ausgehärtet. Am nächsten Morgen wird die Graffiti Farbe mit einem Hochdruckwasserstrahler entfernt. Die Graffiti Farbe kann rückstandsfrei entfernt werden. Die pigmentierte Polysilazanlackschicht wird nicht geschädigt. Die gleiche Stelle auf der Polysilazanlackschicht kann 5-mal mit Graffitifarbe besprüht werden und 5-mal rückstandsfrei entfernt werden. Eine als Referenz besprühte Lackschicht auf Polyurethanbasis versagt schon beim ersten Reinigungszyklus, die Graffitifarbe kann hier nicht mit einem Hochdruckwasserstrahler entfernt werden.

## Patentansprüche

1. Farbpigmentierte Lackzusammensetzung enthaltend ein Lösemittel oder ein Lösemittelgemisch und
a.) bezogen auf die Gesamtformulierung 1 bis 80 Gew.-% eines Polysilazans der Formel (1)
-(SiR'R"-NR"')ₙ- (1)
und
b.) bezogen auf die Gesamtformulierung 1 bis 15 Gew.-% eines oder mehrerer Pigmente
wobei R', R", R'" gleich oder unterschiedlich sind und unabhängig voneinander für Wasserstoff oder einen gegebenenfalls substituierten Alkyl-, Aryl-, Vinyl oder (Trialkoxysilyl)alkyl-Rest stehen, wobei es sich bei n um eine ganze Zahl handelt und n so bemessen ist, dass das Polysilazan ein zahlenmittleres Molekulargewicht von 150 bis 150.000 g/mol aufweist.

2. Lackzusammensetzung nach Anspruch 1, **dadurch gekennzeichnet, dass** solche Polysilazane eingesetzt werden, in denen R', R", R'" unabhängig voneinander für einen Rest aus der Gruppe Wasserstoff, Methyl, Ethyl, Propyl, iso-Propyl, Butyl, iso-Butyl, tert.-Butyl, Phenyl, Tolyl, Vinyl oder 3-(Triethoxysilyl)-propyl, 3-(Trimethoxysilylpropyl) stehen.

3. Lackzusammensetzung nach Anspruch 1 und/oder 2, **dadurch gekennzeichnet, dass** Polysilazane der Formel (2) eingesetzt werden,
-(SiR'R"-NR'")ₙ-(SiR*R**-NR***)ₚ- (2)
wobei R', R", R"', R*, R** und R*** unabhängig voneinander für Wasserstoff oder einen gegebenenfalls substituierten Alkyl-, Aryl-, Vinyl oder (Trialkoxysilyl)alkylRest stehen, wobei n und p so bemessen sind, dass das Polysilazan ein zahlenmittleres Molekulargewicht von 150 bis 150.000 g/mol aufweist.

4. Lackzusammensetzung nach mindestens einem der vorhergehenden Ansprüche, **dadurch gekennzeichnet, dass** Polysilazane der Formel (3) eingesetzt werden,
-(SiR'R"-NR"')ₙ-(SiR*R**-NR***)ₚ-(SiR¹, R²-NR³)_{q}- (3)
wobei R', R", R"', R*, R**, R***, R¹, R² und R³ unabhängig voneinander für Wasserstoff oder einen gegebenenfalls substituierten Alkyl-, Aryl-, Vinyl oder (Trialkoxysilyl)alkyl-Rest stehen, wobei n, p und q so bemessen sind, dass das Polysilazan ein zahlenmittleres Molekulargewicht von 150 bis 150.000 g/mol aufweist.

5. Lackzusammensetzung nach Anspruch 4, **dadurch gekennzeichnet, dass** R', R"' und R*** für Wasserstoff und R", R*, R** und R² für Methyl, R³ für (Triethoxysilyl)propyl und R¹ für Alkyl oder Wasserstoff stehen.

6. Lackzusammensetzung nach mindestens einem der vorhergehenden Ansprüche, **dadurch gekennzeichnet, dass** ein organisches Pigment ausgewählt aus der folgenden Gruppe verwendet wird : Azopigmente, insbesondere Monoazo-, Disazo-, Naphtol-, Benzimidazolon-, Metallkomplexpigmente, polyzyklischen Pigmente, vorzugsweise Isoindolinon-, Isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron, Perylen-, Perinon-, Pyranthron-, Diketopyrrolopyrrol-, Isoviolanthron- und Azomethinpigmente.

7. Lackzusammensetzung nach mindestens einem der vorhergehenden Ansprüche 1 bis 5, **dadurch gekennzeichnet, dass** ein anorganisches Pigment oder ein organisches Pigment oder Mischungen aus beiden Pigmentklassen verwendet werden.

8. Lackzusammensetzung nach mindestens einem der vorhergehenden Ansprüche, **dadurch gekennzeichnet, dass** dieses aus der Gruppe der Ester, Ether, Aromaten oder Aliphaten ausgewählt wird.

9. Lackzusammensetzung nach mindestens einem der vorhergehenden Ansprüche, **dadurch gekennzeichnet, dass** diese weitere Additive enthält.

10. Lackzusammensetzung nach Anspruch 9, **dadurch gekennzeichnet, dass** ein Co-Bindemittel aus der Gruppe der physikalisch trocknenden oder reaktiven Bindemittel zugesetzt wird.

11. Lackzusammensetzung nach mindestens einem der vorhergehenden Ansprüche, **dadurch gekennzeichnet, dass** die Schichtstärke der resultierenden Lackschicht im Bereich von 5 und 300 µm liegen.

12. Lackschicht erhalten durch Beschichtung mit einer Lackzusammensetzung gemäß mindestens einem der Ansprüche 1 bis 10, **dadurch gekennzeichnet, dass** es bei einer Schnellbewitterung der Lackschicht nach DIN 11341 (2000 h) zu keinem Auskreiden kommt.

13. Lackschicht erhalten durch Beschichtung mit einer Lackzusammensetzung gemäß mindestens einem der Ansprüche 1 bis 11, **dadurch gekennzeichnet, dass** die Lackschicht einen Kontaktwinkel von mindestens 85 aufweist.

## Claims

1. A color-pigmented paint composition comprising a solvent or a solvent mixture and
a.) based on the total formulation, 1% to 80% by weight of a polysilazane of the formula (1)
-(SiR'R"-NR"')ₙ- (1)
and
b.) based on the total formulation 1% to 15% by weight of one or more pigments
where R', R", and R"' are alike or different and independently of one another are hydrogen or an unsubstituted or substituted alkyl, aryl, vinyl or (trialkoxysilyl)alkyl radical, n being an integer and n having a magnitude such that the polysilazane has a number average molecular weight of 150 to 150 000 g/mol.

2. The paint composition of claim 1, wherein polysilazanes are used in which R', R", and R"' independently of one another are a radical from the group of hydrogen, methyl, ethyl, propyl, isopropyl, butyl, isobutyl, tert-butyl, phenyl, tolyl, vinyl or 3-(triethoxysilyl)propyl, 3-(trimethoxysilylpropyl).

3. The paint composition of claim 1 and/or 2, wherein polysilazanes of the formula (2) are used
-(SiR'R"-NR"')ₙ-(SiR*R**-NR***)ₚ- (2)
where R', R", R"', R*, R** and R*** independently of one another are hydrogen or an unsubstituted or substituted alkyl, aryl, vinyl or (trialkoxysilyl)alkyl radical, n and p having dimensions such that the polysilazane has a number-average molecular weight of 150 to 150 000 g/mol.

4. The paint composition of at least one of the preceding claims, wherein polysilazanes of the formula (3) are used
- (SiR'R"-NR'")ₙ-(SiR*R**-NR***)ₚ-(SiR¹, R²-NR³)_{q}- (3)
where R', R", R"', R*, R**, R***, R¹, R² and R³ independently of one another are hydrogen or an unsubstituted or substituted alkyl, aryl, vinyl or (trialkoxysilyl)alkyl radical, n, p and q having dimensions such that the polysilazane has a number-average molecular weight of 150 to 150 000 g/mol.

5. The paint composition of claim 4, wherein R', R"' and R*** are hydrogen and R", R*, R** and R² are methyl, R³ is (triethoxysilyl)propyl and R¹ is alkyl or hydrogen.

6. The paint composition of at least one of the preceding claims, wherein an organic pigment selected from the following group is used: azo pigments, more particularly monoazo, disazo, naphthol, benzimidazolone, and metal complex pigments, polycyclic pigments preferably isoindolinone, isoindoline, anthanthrone, thioindigo, thiazineindigo, triarylcarbonium, quinophthalone, anthraquinone, dioxazine,
phthalocyanine, quinacridone, quinacridonequinone, indanthrone, perylene, perinone, pyranthrone, diketopyrrolopyrrole, isoviolanthrone and azomethine pigments.

7. The paint composition of at least one of preceding claims 1 to 5, wherein an inorganic pigment or an organic pigment or mixtures from both pigment classes are used.

8. The paint composition of at least one of the preceding claims, wherein it is selected from the group of esters, ethers, aromatics or aliphatics.

9. The paint composition of at least one of the preceding claims, wherein it comprises further additives.

10. The paint composition of claim 9, wherein a co-binder from the group of physically drying or reactive binders is added.

11. The paint composition of at least one of the preceding claims, wherein the thickness of the resultant coat of paint is in the range of 5 to 300 µm.

12. A coat of paint obtained by coating with a paint composition of at least one of claims 1 to 10, wherein accelerated weathering of the paint coat in accordance with DIN 11341 (2000 h) is not accompanied by chalking.

13. A coat of paint obtained by coating with a coating composition of at least one of claims 1 to 11, wherein the coat of paint has a contact angle of at least 85.

## Revendications

1. Composition de peinture à pigments colorés, contenant un solvant ou un mélange de solvants et
a) par rapport à la formule totale 1 à 80 % en poids d'un polysilazane de formule (1)
- (SiR'R"-NR"')ₙ- (1)
et
b) par rapport à la formule totale 1 à 15 % en poids d'un ou plusieurs pigments
R', R", R"' étant identiques ou différents et représentant chacun indépendamment un atome d'hydrogène ou un radical alkyle, aryle, vinyle ou (trialcoxysilyl)alkyle éventuellement substitué, n étant un nombre entier et n étant choisi de manière que le polysilazane présente une masse moléculaire moyenne en nombre de 150 à 150 000 g/mole.

2. Composition de peinture selon la revendication 1, **caractérisée en ce qu'**on utilise des polysilazanes dans lesquels R', R", R"' représentent chacun indépendamment un radical choisi dans l'ensemble constitué par un atome d'hydrogène, les groupes méthyle, éthyle, propyle, isopropyle, butyle, isobutyle, tert-butyle, phényle, tolyle, vinyle ou 3-(triéthoxysilyl)propyle, 3-(triméthoxysilylpropyle).

3. Composition de peinture selon la revendication 1 et/ou la revendication 2, **caractérisée en ce qu'**on utilise des polysilazanes de formule (2),
-(SiR'R''-NR'")ₙ-(SiR*R**-NR***)ₚ- (2)
dans laquelle R', R", R"', R*, R** et R*** représentent indépendamment les uns des autres un atome d'hydrogène ou un radical alkyle, aryle, vinyle ou (trialcoxysilyl)alkyle éventuellement substitué, n et p étant choisis de manière que le polysilazane présente une masse moléculaire moyenne en nombre de 150 à 150 000 g/mole.

4. Composition de peinture selon au moins l'une quelconque des revendications précédentes, **caractérisée en ce qu'**on utilise des polysilazanes de formule (3),
-(SiR'R"-NR"')ₙ-(SiR*R**-NR***)ₚ-(SiR¹, R²-NR³)_{q}- (3)
dans laquelle R', R", R"', R*, R**, R***, R¹, R² et R³ représentent indépendamment les uns des autres un atome d'hydrogène ou un radical alkyle, aryle, vinyle ou (trialcoxysilyl)alkyle éventuellement substitué, n, p et q étant choisis de manière que le polysilazane présente une masse moléculaire moyenne en nombre de 150 à 150 000 g/mole.

5. Composition de peinture selon la revendication 4, **caractérisée en ce que** R', R"' et R*** représentent un atome d'hydrogène et R", R*, R** et R² représentent le groupe méthyle, R³ représente le groupe (triéthoxysilyl)propyle et R¹ représente un groupe alkyle ou un atome d'hydrogène.

6. Composition de peinture selon au moins l'une quelconque des revendications précédentes, **caractérisée en ce qu'**on utilise un pigment organique choisi dans le groupe suivant : pigments azoïques, en particulier pigments monoazoïques, disazoïques, naphtol, benzimidazolone, à complexes métallifères, pigments polycycliques, de préférence pigments iso-indolinone, iso-indoline, anthanthrone, thio-indigo, thiazineindigo, triarylcarbonium, quinophtalone, anthraquinoniques, dioxazine, phtalocyanine, quinacridone, quinacridonequinone, indanthrone, pérylène, périnone, pyranthrone, dicétopyrrolopyrrole, isoviolanthrone et azométhine.

7. Composition de peinture selon au moins l'une quelconque des revendications 1 à 5 précédentes, **caractérisée en ce qu'**on utilise un pigment inorganique ou un pigment organique ou des mélanges des deux classes de pigments.

8. Composition de peinture selon au moins l'une quelconque des revendications précédentes, **caractérisée en ce qu'**elle est choisi dans le groupe constitué par des esters, éthers, composés aromatiques ou aliphatiques.

9. Composition de peinture selon au moins l'une quelconque des revendications précédentes, **caractérisée en ce qu'**elle contient d'autres additifs.

10. Composition de peinture selon la revendication 9, **caractérisée en ce qu'**on ajoute un co-liant choisi dans le groupe des liants réactifs ou séchant physiquement.

11. Composition de peinture selon au moins l'une quelconque des revendications précédentes, **caractérisée en ce que** l'épaisseur de couche de la couche de peinture résultante se situe dans la plage de 5 à 300 µm.

12. Couche de peinture obtenue par enduction avec une composition de peinture selon au moins l'une quelconque des revendications 1 à 10, **caractérisée en ce qu'**il n'apparaît aucun farinage dans un essai accéléré de résistance de la couche de peinture aux agents atmosphériques selon DIN 11341 (2 000 h).

13. Couche de peinture obtenue par enduction avec une composition de peinture selon au moins l'une quelconque des revendications 1 à 11, **caractérisée en ce que** la couche de peinture présente un angle de contact d'au moins 85.
